Europäisches Patentamt

European Patent Office

Office européen des brevets

(19)

(11) **EP 1 265 374 B1**

(12) **FASCICULE DE BREVET EUROPEEN**

(45) Date de publication et mention
de la délivrance du brevet:
**17.12.2003  Bulletin 2003/51**

(51) Int Cl.⁷: **H04B 1/707**

(21) Numéro de dépôt: **02291319.8**

(22) Date de dépôt: **30.05.2002**

(54) **Procédé et dispositif de traitement de signal dans un récepteur de radiocommunication à étalement de spectre**

Verfahren und Vorrichtung zur Signalverarbeitung in einem Spreizspektrum Funkkommunikationsempfänger

Method and apparatus for signal processing in a spread spectrum radio communications receiver

(84) Etats contractants désignés:
**AT BE CH CY DE DK ES FI FR GB GR IE IT LI LU MC NL PT SE TR**

(30) Priorité:  **06.06.2001  FR 0107399**

(43) Date de publication de la demande:
**11.12.2002  Bulletin 2002/50**

(73) Titulaire: **Nortel Networks Limited
St. Laurent, Quebec H4S 2A9 (CA)**

(72) Inventeurs:
• **Jard, Alexandre
75015 Paris (FR)**

• **El Nahas El Homsi, Hassan
75015 Paris (FR)**
• **Abdi, Moussa
75012 Paris (FR)**

(74) Mandataire: **Loisel, Bertrand
Cabinet Plasseraud,
84, rue d'Amsterdam
75440 Paris Cédex 09 (FR)**

(56) Documents cités:
**EP-A- 1 077 551          US-A- 6 011 812**

## Description

La présente invention concerne les systèmes de radiocommunication avec les mobiles utilisant des techniques d'accès multiple à répartition par codes (CDMA, « code-division multiple access »). Elle se situe dans les récepteurs utilisés dans les stations fixes de ces systèmes et opérant une démodulation cohérente de signaux à étalement de spectre provenant d'un ensemble de terminaux radio.

La démodulation cohérente requiert différents paramètres représentant le canal de propagation entre l'émetteur et le récepteur. Certains de ces paramètres varient relativement lentement et peuvent être estimés par des méthodes statistiques de sondage. C'est le cas par exemple des retards affectés aux trajets multiples de propagation dans le classique récepteur en râteau (« rake »). Les retards propres aux différents trajets peuvent être mis à jour à fréquence assez basse, par exemple de l'ordre de la centaine de millisecondes. D'autres paramètres ont des variations brusques, à l'échelle de la durée d'un symbole d'information, dues au phénomène de fading. C'est notamment le cas des amplitudes instantanées de réception des symboles suivant les trajets de propagation pris en considération, qui sont nécessaires pour la démodulation cohérente. Ces amplitudes instantanées sont des amplitudes complexes, rendant compte de l'atténuation et du déphasage subis à chaque instant le long des trajets. En général, ces amplitudes complexes sont estimées à partir de symboles connus a priori, ou symboles pilotes, intercalés parmi les symboles d'information transmis pour permettre la démodulation cohérente.

On sait que les récepteurs CDMA sont affectés par le problème proche-lointain (« near-far ») selon lequel l'émission des mobiles proches d'une station de base a tendance à masquer celle des mobiles éloignés. La raison en est que tous ces mobiles partagent la même fréquence montante en même temps, la distinction entre eux résultant de la quasi-orthogonalité des codes d'étalement. Des techniques de contrôle de la puissance d'émission sont mises en oeuvre pour limiter l'impact de ce problème, mais il demeure que la station de base ne reçoit pas avec la même puissance les signaux émis par les différents mobiles, notamment lorsque les facteurs d'étalement des différents canaux ne sont pas les mêmes ou lorsqu'un mobile se déplace rapidement, ce qui peut mettre en défaut l'algorithme de contrôle de puissance.

En général, les méthodes d'estimation de canal font l'hypothèse que le bruit présent sur un canal est un bruit blanc. Si cette hypothèse est correcte dans le cas du bruit thermique, elle ne l'est pas pour le bruit engendré par les autres émetteurs. Les méthodes d'estimation engendrent alors des erreurs, particulièrement sensibles lorsque la puissance reçue sur un canal domine celle reçue sur un ou plusieurs autres canaux. Un procédé d'estimation de canal pour un système CDMA correspondant au préambule des revendications 1 et 6 est décrit dans le document EP 1 077 551.

Un but de la présente invention est de rendre plus fiables les estimations des canaux CDMA superposés afin d'améliorer les performances des récepteurs.

L'invention propose ainsi un procédé de traitement de signal dans une station de base d'un système de radiocommunication à accès multiple à répartition par codes, dans lequel on soumet un premier signal reçu par la station de base à un ensemble de filtres adaptés à des codes d'étalement alloués à des canaux pilotes en provenance de terminaux radio respectifs, et on traite des vecteurs de sortie des filtres adaptés pour estimer des paramètres représentant lesdits canaux. Les paramètres estimés pour un canal en provenance d'un terminal radio comprennent des vecteurs propres représentant des trajets de propagation entre ce terminal radio et la station de base, respectivement associés à des amplitudes de réception suivant lesdits trajets. Selon l'invention, le traitement des vecteurs de sortie des filtres adaptés comprend une estimation de paramètres pour au moins un premier canal sur la base du vecteur de sortie d'un premier filtre adapté au code d'étalement alloué audit premier canal, une modification du vecteur de sortie d'un second filtre adapté au code d'étalement alloué à au moins un second canal, le vecteur de sortie du second filtre adapté étant en moyenne moins énergétique que le vecteur de sortie du premier filtre adapté, et une estimation de paramètres pour ledit second canal sur la base du vecteur de sortie modifié du second filtre adapté. La modification du vecteur de sortie du second filtre adapté comporte au moins une soustraction d'un vecteur proportionnel à une projection dudit vecteur de sortie du second filtre adapté parallèlement à un vecteur de la forme $M^H.M_1.v_{1,i}$, où $M_1$ et $M$ sont des matrices déterminées par les codes d'étalement respectivement alloués auxdits premier et second canaux, $v_{1,i}$ est un des vecteurs propres estimés pour le premier canal, et $(.)^H$ désigne le transposé conjugué.

Le vecteur propre $v_{1,i}$ est avantageusement le vecteur propre estimé pour le premier canal qui est associé à l'amplitude dont le module est en moyenne le plus élevé. On peut aussi tenir compte de plusieurs vecteurs propres associés à des valeurs propres de module élevé dans la diagonalisation des matrices d'autocorrélation du fading sur les différents canaux.

On procède ainsi, après le filtrage adapté, à une correction des réponses impulsionnelles estimées de canaux reçus relativement faiblement pour tenir compte de l'interférence causée par un ou plusieurs trajets d'un ou plusieurs canaux reçus avec plus de puissance.

Cette correction n'introduit pas une complexité très importante dans le récepteur, particulièrement lorsque des codes d'étalement courts son utilisés.

Elle revient à faire une projection du vecteur de réponse impulsionnelle estimée du canal peu énergétique (en sortie du filtre adapté) sur un sous-espace orthogonal au vecteur propre associé au trajet le plus fort du canal reçu avec le plus de puissance. Le biais ainsi introduit est très faible, et il évite les erreurs d'estimation dues à la présence éventuelle d'un interféreur puissant.

Pour éviter d'éventuels problèmes d'amplification du bruit lorsque le bruit blanc est plus puissant que l'interféreur, on procède de préférence à une pondération de la projection. Le vecteur soustrait est alors donné par $\frac{\alpha_i}{\alpha_i + N0}$ $J_i . J_i^H . h$, où h est le vecteur de sortie du second filtre adapté, $J_i = \frac{1}{Q}.M^H.M_1.v_{1,i}$, Q est le facteur d'étalement sur les canaux pilotes, $\alpha_i$ est une puissance moyenne de réception suivant le trajet de propagation représenté par le vecteur propre $v_{1,i}$ (valeur propre associée à $v_{1,i}$) et N0 est une puissance de bruit estimée sur le second canal.

Le procédé est applicable lorsque les signaux sont transmis sur deux voies ou canaux parallèles entre l'émetteur et le récepteur, par exemple deux voies en quadrature dont une comporte des symboles pilotes connus a priori et l'autre des symboles d'information inconnus. Ce cas est celui des liaisons montantes dans les systèmes cellulaires de troisième génération de type UMTS (« Universal Mobile Telecommunications System »).

Chacun des canaux pilotes est alors formé conjointement à un canal de données en quadrature issu du même terminal radio. Un second signal, reçu par la station de base en quadrature de phase par rapport audit premier signal, est soumis à un second ensemble de filtres adaptés à des codes d'étalement respectivement alloués aux canaux de données en provenance des terminaux radio. On modifie certains au moins des vecteurs de sortie des filtres adaptés du second ensemble, et on estime des symboles d'information transmis sur un canal de données en provenance d'un terminal radio en soumettant le vecteur de sortie modifié du second filtre adapté au code d'étalement alloué à ce canal de données à un récepteur en râteau défini par les paramètres estimés pour le canal pilote en provenance dudit terminal radio. La modification du vecteur de sortie dudit filtre adapté du second ensemble comporte au moins une soustraction d'un vecteur proportionnel à une projection dudit vecteur de sortie parallèlement à un vecteur de la forme $M'^H.M_1.v_{1,i}$, où M' est une matrice déterminée par le code d'étalement alloué audit canal de données.

En d'autres termes, la même correction par projection est effectuée sur les canaux pilotes et sur les canaux de données.

Un autre aspect de la présente invention se rapporte à un dispositif de traitement de signal dans une station de base, adapté à la mise en oeuvre du procédé ci-dessus.

D'autres particularités et avantages de la présente invention apparaîtront dans la description ci-après d'un exemple de réalisation non limitatif, en référence aux dessins annexés, dans lesquels :

- la figure 1 est un schéma synoptique de la partie réception d'une station de base selon l'invention ; et
- les figures 2 et 3 sont des schémas synoptiques de récepteurs appartenant à la station de base de la figure 1.

L'invention est décrite ci-après dans le cadre d'un système de radiocommunication à étalement de spectre utilisant une technique d'accès multiple à répartition par codes (CDMA), dont l'UMTS est un exemple. Un canal d'un tel système sur une fréquence porteuse est défini par un code d'étalement composé d'échantillons discrets appelés « chips », à valeurs réelles (± 1) ou complexes $(\pm 1 \pm j)/\sqrt{2}$, qui se succèdent à une cadence de chips $F_c$.

Dans le cas des liaisons montantes (des terminaux vers les stations de base) d'un réseau UMTS en mode de duplex fréquentiel (FDD), un terminal utilise deux canaux en quadrature utilisant chacun un code d'étalement à valeurs réelles avec une modulation de phase binaire (BPSK, « Binary Phase Shift Keying ») et $F_c$ = 3,84 Mchip/s. Les deux signaux BPSK modulent deux ondes radio en quadrature. L'un de ces deux canaux (voie I) porte les données d'utilisateur, et l'autre (voie Q) porte des informations de contrôle.

Ces informations de contrôle comportent des bits pilotes connus a priori de la station de base et qui lui permettent d'estimer les paramètres du canal de propagation. Dans la suite, on fera donc référence à la voie I en tant que canal pilote.

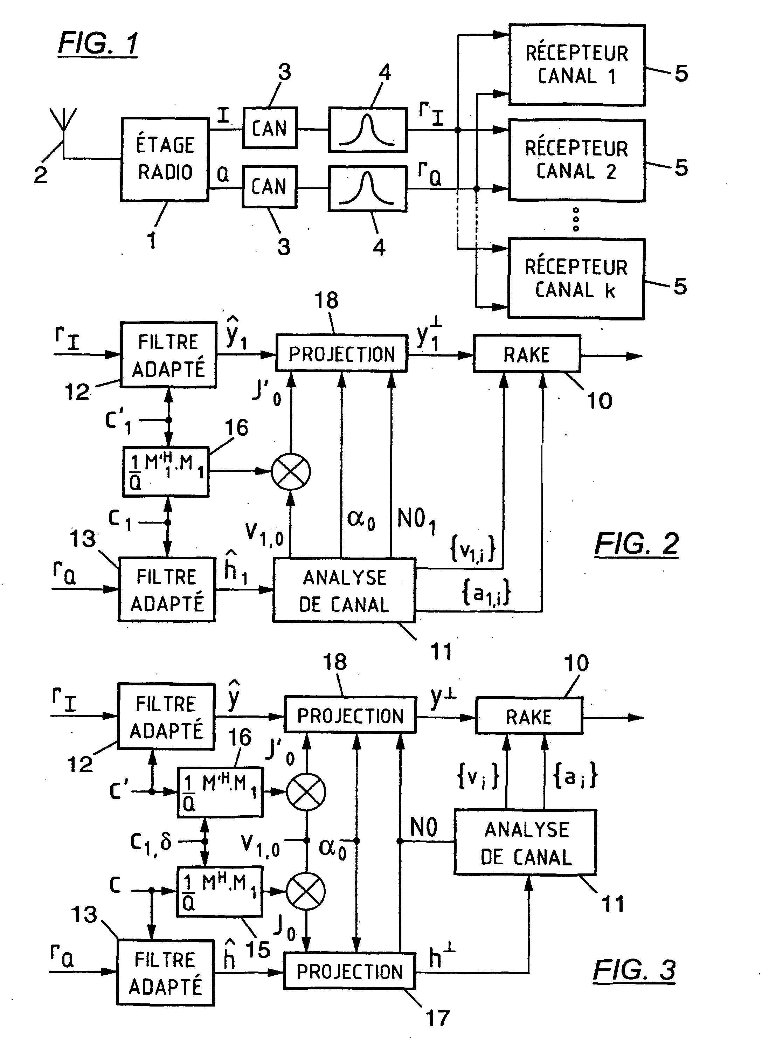

La figure 1 montre la partie réception d'une station de base (« node B ») d'un réseau de type UMTS en mode FDD opérant sur les deux voies en quadrature (I et Q). La voie I (partie réelle du signal complexe en bande de base) transporte les bits de données, tandis que la voie Q (partie imaginaire) transporte les bits de contrôle, notamment les bits pilotes, avec par exemple un facteur d'étalement Q = 256. Pour une description précise de ces canaux montants, on pourra se reporter à la spécification technique 3G TS 25.211, version 3.3.0, « Physical Channels and Mapping of Transport Channels onto Physical Channels (FDD) (Release 1999) », publiée en juin 2000 par le 3GPP (« 3rd Generation Partnership Project »), section 5.2.1.

La station de base illustrée par la figure 1 comporte un étage radio 1 qui effectue les traitements analogiques requis sur le signal radio capté par l'antenne 2. L'étage radio 1 délivre un signal analogique complexe dont les parties réelle et imaginaire sont numérisées par les convertisseurs analogique-numérique 3 sur des voies de traitement respectives I et Q. Sur chaque voie, un filtre 4 adapté à la mise en forme des impulsions par l'émetteur produit un signal numérique $r_I$, $r_Q$ à la cadence des chips des codes d'étalement.

Le signal complexe résultant $r = r_I + j.r_Q$ est soumis à des récepteurs 5 qui opèrent les traitements d'estimation des réponses de k canaux et des symboles transmis sur ces k canaux.

Les signaux émis par un terminal vers une station de base se propagent selon des trajets multiples, et parviennent à la station de base avec des signaux transmis par d'autres terminaux avec d'autres codes d'étalement.

On considère la réception par la station de base d'un bit d'information inconnu b sur la voie 1 depuis un terminal mobile, en synchronisme avec un bit pilote connu (par exemple égal à 1) sur la voie Q. La durée $1/F_s$ d'un symbole (bit) sur le canal est un multiple de la durée du chip, le rapport entre les deux étant le facteur d'étalement Q = $F_c/F_s$ du canal. Dans l'exemple de l'UMTS, le facteur d'étalement Q est une puissance de 2 comprise entre 4 et 256.

On note d'autre part L le nombre de trajets de propagation pris en compte par le récepteur 5, et W la longueur de la réponse impulsionnelle du canal, exprimée en nombre de chips (par exemple W = 6.Q pour une réponse sur 400 µs).

Le récepteur 5 utilise un récepteur « rake » 10 de type classique (figures 2 et 3). Le profil de propagation du canal est défini par un jeu de vecteurs propres $v_i$ et de valeurs propres associées $\lambda_i$ pour $0 \leq i < L$, calculé avec une périodicité relativement grande (par exemple de l'ordre de la centaine de millisecondes) par un module d'analyse de canal 11. Chaque vecteur propre $v_i$, de dimension W, est une forme d'onde associée à un écho dans la réponse impulsionnelle du canal. Dans un récepteur « rake » traditionnel, chaque vecteur propre $v_i$ représente une impulsion affectée d'un décalage temporel. Dans le récepteur « rake » 10, chaque vecteur propre $v_i$ est associé à une amplitude $a_i$ qui varie d'un bit à l'autre. L'amplitude $a_i$, calculée pour chaque bit par le module 11, est une variable aléatoire telle que l'espérance mathématique de $|a_i|^2$ soit égale à la valeur propre $\lambda_i$. Le récepteur « rake » 10 reçoit un vecteur d'entrée de dimension W, calcule le produit scalaire de ce vecteur d'entrée avec chacun des vecteurs propres $v_i$, puis la somme de ces L produits scalaires pondérés par les amplitudes $a_i^*$. Cette somme pondérée est une estimation souple du bit transmis b.

De façon connue en soi, le module d'analyse de canal 11 peut procéder comme suit pour estimer les couples de paramètres ($v_i$, $a_i$) à partir de vecteurs d'entrée successifs X de dimension W représentant des estimations successives de la réponse impulsionnelle du canal considéré obtenues au moyen des bits pilotes :

- calcul de l'espérance mathématique K de la matrice $X.X^H$ sur une durée typique de l'ordre de la centaine de millisecondes ;
- diagonalisation de la matrice K, et sélection des L valeurs propres de plus grands modules $\lambda_i$ ($0 \leq i < L$, avec $|\lambda_0| \geq |\lambda_1| \geq ... \geq |\lambda_{L-1}|$), respectivement associées à des vecteurs propres $v_i$;
- projection du vecteur X sur chacun des vecteurs propres retenus $v_i$, pour obtenir les amplitudes $a_i$. Ces amplitudes peuvent être obtenues par une projection simple ($a_i = v_i^H.X$), ou par une projection pondérée pour réaliser l'estimation selon le critère du maximum a posteriori (MAP : $a_i = \frac{\lambda_i}{\lambda_i + N0}.v_i^H.X$, N0 désignant une estimation de la puissance du bruit sur le canal). D'autres méthodes d'estimations connues sont encore utilisables (estimation au sens des moindres carrés, sous contrainte nulle, ...) ;
- calcul de la puissance du bruit N0 égale à l'espérance mathématique de l'énergie par bit $|B|^2$ du bruit résiduel

$$B = X - \sum_{i=0}^{L-1} a_i v_i.$$

A l'égard du terminal traité par un récepteur 5, le signal r reçu par la station de base en relation avec le bit considéré b peut s'écrire sous la forme d'un vecteur de dimension Q+W-1 :

$$r = (b.M' + j.M).h + n \tag{1}$$

où :

- h est un vecteur de dimension W contenant la réponse impulsionnelle du canal entre le terminal et la station de base, échantillonnée à la cadence des chips ;
- M et M' sont des matrices de Toeplitz à Q+W-1 lignes et W colonnes, dont les colonnes sont définies par les codes d'étalement c = [c(0), c(1), ..., c(Q-1)] et c' = [c'(0), c'(1),.... c'(Q-1)] utilisés par le terminal sur la voie Q et sur la voie l, respectivement :

$$M = \begin{pmatrix} c(0) & 0 & \cdots & 0 \\ c(1) & c(0) & \ddots & \vdots \\ \vdots & c(1) & \ddots & 0 \\ c(Q-1) & \vdots & \ddots & c(0) \\ 0 & c(Q-1) & & c(1) \\ \vdots & & \ddots & \ddots & \vdots \\ 0 & & \cdots & 0 & c(Q-1) \end{pmatrix} \qquad (2)$$

$$M' = \begin{pmatrix} c'(0) & 0 & \cdots & 0 \\ c'(1) & c'(0) & \ddots & \vdots \\ \vdots & c'(1) & \ddots & 0 \\ c'(Q-1) & \vdots & \ddots & c'(0) \\ 0 & c'(Q-1) & & c'(1) \\ \vdots & & \ddots & \ddots & \vdots \\ 0 & & \cdots & 0 & c'(Q-1) \end{pmatrix} \qquad (3)$$

- n est un vecteur contenant des échantillons de bruit additif. Ce bruit n'est pas nécessairement un bruit blanc car il comporte les contributions des autres canaux, issus des autres terminaux émettant en même temps.

Sur la voie I, la partie réelle $r_I$ de ce signal r est soumise à un filtre adapté 12 correspondant au code d'étalement c' affecté aux bits de données du canal. Sur la voie Q, un autre filtre adapté 13, fonctionnant avec le code d'étalement c, reçoit la partie imaginaire $r_Q$ du signal r et produit une première estimation de la réponse impulsionnelle du canal :

$$\hat{h} = M^H . r_I \qquad (4)$$

La figure 2 utilise des notations analogues à celles de la figure 3. On y a ajouté un indice 1 pour signifier que le récepteur de la figure 2 est celui qui traite le canal le plus énergétique. Ce canal est aisément identifié, par exemple en maximisant la moyenne de la norme des vecteurs h sur la période de mise à jour des vecteurs propres par les modules 11.

Dans ce récepteur 5, affecté au canal le plus puissant (figure 2), le module d'analyse de canal 11 fonctionne sur la base des vecteurs $X = h_1$ successivement fournis par le filtre adapté 13. Il en déduit les vecteurs propres $v_{1,i}$ et les amplitudes instantanées associées $a_{1,i}$ ($0 \le i < L$) fournies au récepteur « rake » 10. Les valeurs propres correspondant aux vecteurs propres $v_{1,i}$ sont notées $\alpha_i = \lambda_{1,i}$.

Le trajet le plus énergétique de la réponse de ce canal le plus puissant correspond au vecteur propre $v_{1,0}$ et à la valeur propre $\lambda_{1,0} = \alpha_0$. Ce vecteur propre $v_{1,0}$ définit dans l'espace des signaux une direction suivant laquelle des interférences sont susceptibles d'affecter les autres canaux. Après projection sur le sous-espace de signal correspondant à un autre canal après filtrage adapté, la direction d'interférence est définie par le vecteur normé :

$$J_0 = \frac{1}{Q} . M^H . M_1 . v_{1,0} \qquad (5)$$

pour une voie Q,

$$J'_0 = \frac{1}{Q}.M'^H.M_1.v_{1,0} \qquad (6)$$

pour une voie I, où $M_1$ est la matrice de codes relative au canal pilote reçu avec le plus de puissance, tenant compte du décalage temporel éventuel $\delta$ (en nombre de chips) entre le canal considéré et le canal le plus puissant :

$$M_1 = \begin{pmatrix} c_1(\delta) & 0 & \cdots & 0 \\ c_1(\delta+1) & c_1(\delta) & \ddots & \vdots \\ \vdots & c_1(\delta+1) & \ddots & 0 \\ c_1(\delta+Q-1) & \vdots & \ddots & c_1(\delta) \\ 0 & c_1(\delta+Q-1) & & c_1(\delta+1) \\ \vdots & \ddots & \ddots & \vdots \\ 0 & \cdots & 0 & c_1(\delta+Q-1) \end{pmatrix} \qquad (7)$$

Les matrices $\frac{1}{Q}.M^H.M_1$ et $\frac{1}{Q}.M'^H.M_1$ intervenant dans les expressions (5) et (6) sont constantes lorsque des codes courts sont utilisés (périodicité d'un temps bit), ce qui minimise les calculs. Sinon, les vecteurs $J_0$ et $J'_0$ sont à calculer pour chaque bit.

Ces deux matrices sont calculées par des modules respectifs 15 et 16 dans les récepteurs du type représenté sur la figure 3, en fonction des codes c et $c_1$ et du décalage $\delta$ pour $\frac{1}{Q}.M^H.M_1$ (module 15) et en fonction des codes c' et $c_1$ et du décalage $\delta$ pour $\frac{1}{Q}.M'^H.M_1$ (module 16). Dans chaque récepteur (figure 3), le vecteur propre $v_{1,0}$ est multiplié par les matrices $\frac{1}{Q}.M^H.M_1$ et $\frac{1}{Q}.M'^H.M_1$ produites par les modules 15 et 16 pour obtenir les vecteurs normés $J_0$ et $J'_0$ selon les relations (5) et (6), respectivement.

Un module 16 est également présent dans le récepteur de la figure 2 pour calculer la matrice $\frac{1}{Q}.M'^H_1.M_1$ en fonction des codes $c'_1$ et $c_1$ (le décalage $\delta$ est nul entre les voies I et Q qui sont synchrones). Cette matrice sert également à déterminer une direction d'interféreur $J'_0$ pour la voie de données.

Dans le récepteur selon la figure 3, la direction d'interférence $J_0$ est fournie à un module 17 qui projette l'estimation h de la réponse impulsionnelle délivrée par le filtre adapté 13 sur un sous-espace orthogonal à $J_0$, ce qui donne lieu à un vecteur de réponse corrigé $h^\perp$. La correction consiste plus précisément à retrancher de h un vecteur proportionnel à sa projection suivant la direction $J_0$. On peut notamment prendre :

$$h^\perp = \hat{h} - \frac{\alpha_0}{\alpha_0 + N0} J_0.J_0^H.\hat{h} = \left[ Id - \frac{\alpha_0}{\alpha_0 + N0} J_0.J_0^H \right].\hat{h} \qquad (8)$$

où la matrice de projection pondérée

$$\left[ Id - \frac{\alpha_0}{\alpha_0 + N0} J_0.J_0^H \right]$$

est mise à jour à relativement basse fréquence. C'est le vecteur corrigé $h^\perp = X$ qui est fourni au module 11 d'analyse du canal.

De même, dans chaque récepteur, la direction d'interférence $J'_0$ est fournie à un module 18 qui projette le vecteur de sortie y du filtre adapté 12 sur un sous-espace orthogonal à $J'_0$, ce qui donne lieu à un vecteur corrigé $y^\perp$. La correction consiste à retrancher de y un vecteur proportionnel à sa projection suivant la direction $J'_0$. On peut notamment prendre :

$$y^{\perp} = \hat{y} - \frac{\alpha_0}{\alpha_0 + N0} J'_0 \cdot J'^H_0 \cdot \hat{y} = \left[ Id - \frac{\alpha_0}{\alpha_0 + N0} J'_0 \cdot J'^H_0 \right] \cdot \hat{y} \qquad (9)$$

où la matrice de projection pondérée

$$\left[ Id - \frac{\alpha_0}{\alpha_0 + N0} J'_0 \cdot J'^H_0 \right]$$

est mise à jour à relativement basse fréquence. C'est le vecteur corrigé $y^{\perp}$ qui est fourni au récepteur « rake » 10 pour estimer le symbole d'information transmis.

Dans la description qui précède, la projection des vecteurs $\hat{h}$ et $\hat{y}$ est effectuée sur un sous-espace orthogonal à une seule direction d'interférence $J_0$ ou $J'_0$. On notera qu'il est possible d'étendre la méthode à plusieurs directions d'interférence définies par plusieurs trajets énergétiques (dans la limite de la dimension du sous-espace).

Par exemple, pour p > 1 trajets, on peut prendre les p vecteurs propres $v_{1,0}$, $v_{1,1}$, ..., $v_{1,p-1}$ correspondant aux valeurs propres de plus grands modules $\alpha_0 = \lambda_{1,0}$, $\alpha_1 = \lambda_{1,1}$, ..., $\alpha_{p-1} = \lambda_{1,p-1}$ identifiées par le module d'analyse 11 traitant la réponse $h_1$, et déterminer les vecteurs normés :

$$J_i = \frac{1}{Q} \cdot M^H \cdot M_1 \cdot v_{1,i} \qquad (10)$$

pour une voie Q, et

$$J'_i = \frac{1}{Q} \cdot M'^H \cdot M_1 \cdot v_{1,i} \qquad (11)$$

pour une voie I ($0 \leq i < p$). Les matrices de projection pondérée des relations (8) et (9) sont alors remplacées par

$$\left[ Id - \sum_{i=0}^{p-1} \frac{\alpha_i}{\alpha_i + N0} J_i \cdot J_i^H \right]$$

et

$$\left[ Id - \sum_{i=0}^{p-1} \frac{\alpha_i}{\alpha_i + N0} J'_i \cdot J'^H_i \right],$$

respectivement. Les p trajets considérés peuvent aussi être identifiés par des modules d'analyse 11 appartenant à des récepteurs distincts.

Le procédé est également applicable dans le cas où la station de base possède plusieurs antennes de réception distinctes, dont les signaux sont combinés pour procurer de la diversité spatiale. Dans un cas à deux antennes, le sous-espace décrit par l'interféreur principal (pour une voie Q) est engendré par la matrice :

$$J_s = \begin{pmatrix} J_0 & -\frac{\rho}{|\rho|} \cdot J_0 \\ \frac{\rho}{|\rho|} \cdot J_0 & J_0 \end{pmatrix} \qquad (12)$$

et la matrice de projection pondérée de la relation (8) devient :

$$\left[ Id - J_s \left( \begin{array}{cc} \dfrac{\alpha_0(1+|\rho|)}{\alpha_0(1+|\rho|)+N0} & 0 \\ 0 & \dfrac{\alpha_0(1-|\rho|)}{\alpha_0(1-|\rho|)+N0} \end{array} \right) . J_s^H \right],$$

où $\rho$ est le facteur de corrélation entre les deux antennes.

## Revendications

1. Procédé de traitement de signal dans une station de base d'un système de radiocommunication à accès multiple à répartition par codes, dans lequel on soumet un premier signal ($r_Q$) reçu par la station de base à un ensemble de filtres (13) adaptés à des codes d'étalement alloués à des canaux pilotes en provenance de terminaux radio respectifs, et on traite des vecteurs de sortie ($h_1$,h) des filtres adaptés pour estimer des paramètres représentant lesdits canaux, les paramètres estimés pour un canal en provenance d'un terminal radio comprenant des vecteurs propres ($v_{1,i}$, $v_i$) représentant des trajets de propagation entre ledit terminal radio et la station de base, respectivement associés à des amplitudes ($a_{1,i}$, $a_i$) de réception suivant lesdits trajets, **caractérisé en ce que** le traitement des vecteurs de sortie des filtres adaptés comprend une estimation de paramètres ($v_{1,i}$, $a_{1,i}$) pour au moins un premier canal sur la base du vecteur de sortie ($h_1$) d'un premier filtre adapté au code d'étalement alloué audit premier canal, une modification du vecteur de sortie (h) d'un second filtre adapté au code d'étalement alloué à au moins un second canal, le vecteur de sortie du second filtre adapté étant en moyenne moins énergétique que le vecteur de sortie du premier filtre adapté, et une estimation de paramètres ($v_i$, $a_i$) pour ledit second canal sur la base du vecteur de sortie modifié ($h^{\perp}$) du second filtre adapté, et **en ce que** la modification du vecteur de sortie du second filtre adapté comporte au moins une soustraction d'un vecteur proportionnel à une projection dudit vecteur de sortie du second filtre adapté parallèlement à un vecteur de la forme $M^H.M_1.v_{1,i}$, où $M_1$ et M sont des matrices déterminées par les codes d'étalement respectivement alloués auxdits premier et second canaux, $v_{1,i}$ est un des vecteurs propres estimés pour le premier canal, et $(.)^H$ désigne le transposé conjugué.

2. Procédé selon la revendication 1, dans lequel ledit vecteur propre $v_{1,i}$ est le vecteur propre estimé pour le premier canal qui est associé à l'amplitude dont le module est en moyenne le plus élevé.

3. Procédé selon l'une quelconque des revendications précédentes, dans lequel les matrices $M_1$ et M sont des matrices de Toeplitz dont les colonnes sont données par les codes d'étalement respectivement alloués aux premier et second canaux, en tenant compte d'un décalage temporel entre les premier et second canaux.

4. Procédé selon l'une quelconque des revendications précédentes, dans lequel ledit vecteur soustrait est donné par $\dfrac{\alpha_i}{\alpha_i+N0} J_i J_i^H.h$, où h est le vecteur de sortie du second filtre adapté, $J_i = \dfrac{1}{Q}.M^H.M_1.v_{1,i}$, Q est le facteur d'étalement sur les canaux pilotes, $\alpha_i$ est une puissance moyenne de réception suivant le trajet de propagation représenté par le vecteur propre $v_{1,i}$ et N0 est une puissance de bruit estimée sur le second canal.

5. Procédé selon l'une quelconque des revendications précédentes, dans lequel chacun desdits canaux pilotes est formé conjointement à un canal de données en quadrature issu du même terminal radio, dans lequel on soumet un second signal ($r_I$), reçu par la station de base en quadrature de phase par rapport audit premier signal ($r_Q$), à un second ensemble de filtres (12) adaptés à des codes d'étalement respectivement alloués aux canaux de données en provenance des terminaux radio, on modifie certains au moins des vecteurs de sortie (y) des filtres adaptés du second ensemble, et on estime des symboles d'information transmis sur un canal de données en provenance d'un terminal radio en soumettant le vecteur de sortie modifié ($y^{\perp}$) du second filtre adapté au code d'étalement alloué audit canal de données à un récepteur en râteau (10) défini par les paramètres ($v_i$, $a_i$) estimés pour le canal pilote en provenance dudit terminal radio, et dans lequel la modification du vecteur de sortie dudit filtre adapté du second ensemble comporte au moins une soustraction d'un vecteur proportionnel à une projection dudit vecteur de sortie parallèlement à un vecteur de la forme $M'^H.M_1.v_{1,i}$, où M' est une matrice déterminée par le code d'étalement alloué audit canal de données.

6. Dispositif de traitement de signal dans une station de base d'un système de radiocommunication à accès multiple à répartition par codes, comprenant un ensemble de filtres (13) adaptés à des codes d'étalement alloués à des canaux pilotes en provenance de terminaux radio respectifs, pour recevoir un premier signal ($r_I$) reçu par la station de base, et des moyens (11, 17) de traitement de vecteurs de sortie des filtres adaptés pour estimer des paramètres représentant lesdits canaux, les paramètres estimés pour un canal en provenance d'un terminal radio comprenant des vecteurs propres ($v_{1,i}$, $v_i$) représentant des trajets de propagation entre ledit terminal radio et la station de base, respectivement associés à des amplitudes ($a_{1,i}$, $a_i$) de réception suivant lesdits trajets, **caractérisé en ce que** lesdits moyens de traitement comprennent des moyens (11) d'estimation de paramètres ($v_{1,i}$, $a_{1,i}$) pour au moins un premier canal sur la base du vecteur de sortie ($\hat{h}_1$) d'un premier filtre adapté au code d'étalement alloué audit premier canal, des moyens (17) de modification du vecteur de sortie ($\hat{h}$) d'un second filtre adapté au code d'étalement alloué à au moins un second canal, le vecteur de sortie du second filtre adapté étant en moyenne moins énergétique que le vecteur de sortie du premier filtre adapté, et des moyens (11) d'estimation de paramètres ($v_i$, $a_i$) pour ledit second canal sur la base du vecteur de sortie modifié ($h^\perp$) du second filtre adapté, les moyens de modification étant agencés pour soustraire du vecteur de sortie du second filtre adapté au moins un vecteur proportionnel à une projection dudit vecteur de sortie du second filtre adapté parallèlement à un vecteur de la forme $M^H.M_1.v_{1,i}$, où $M_1$ et M sont des matrices déterminées par les codes d'étalement respectivement alloués auxdits premier et second canaux, $v_{1,i}$ est un des vecteurs propres estimés pour le premier canal, et $(.)^H$ désigne le transposé conjugué.

7. Dispositif selon la revendication 6, dans lequel ledit vecteur propre $v_{1,i}$ est le vecteur propre estimé pour le premier canal qui est associé à l'amplitude dont le module est en moyenne le plus élevé.

8. Dispositif selon la revendication 6 ou 7, dans lequel les matrices $M_1$ et M sont des matrices de Toeplitz dont les colonnes sont données par les codes d'étalement respectivement alloués aux premier et second canaux, en tenant compte d'un décalage temporel entre les premier et second canaux.

9. Dispositif selon l'une quelconque des revendications 6 à 8, dans lequel ledit vecteur soustrait est donné par $\frac{\alpha_i}{\alpha_i + N0}J_iJ_i^H.h$, où h est le vecteur de sortie du second filtre adapté, $J_i = \frac{1}{(Q)}.M^H.M_1.v_{1,i}$, Q est le facteur d'étalement sur les canaux pilotes, $\alpha_i$ est une puissance moyenne de réception suivant le trajet de propagation représenté par le vecteur propre $v_{1,i}$ et N0 est une puissance de bruit estimée sur le second canal.

10. Dispositif selon l'une quelconque des revendications 6 à 9, comprenant en outre un second ensemble de filtres (12) adaptés à des codes d'étalement respectivement alloués à des canaux de données formés conjointement aux canaux pilotes en provenance des terminaux radio, pour recevoir un second signal ($r_I$) reçu par la station de base en quadrature de phase par rapport audit premier signal ($r_Q$), des moyens (18) de modification de certains au moins des vecteurs de sortie ($\hat{y}$) des filtres adaptés du second ensemble, et des moyens d'estimation de symboles d'information transmis sur au moins un canal de données en provenance d'un terminal radio, incluant un récepteur en râteau (10) défini par les paramètres ($v_i$, $a_i$) estimés pour le canal pilote en provenance dudit terminal radio et recevant le vecteur de sortie modifié ($y^\perp$) du second filtre adapté au code d'étalement alloué audit canal de données, et dans lequel les moyens de modification du vecteur de sortie d'un filtre adapté du second ensemble comportent des moyens de soustraction d'un vecteur proportionnel à une projection dudit vecteur de sortie parallèlement à un vecteur de la forme $M'^H.M_1.v_{1,i}$, où M' est une matrice déterminée par le code d'étalement alloué audit canal de données.

**Patentansprüche**

1. Verfahren zur Signalverarbeitung in einer Basisstation eines Systems zur Funkkommunikation mit Codemultiplex-Zugriff, bei dem

ein erstes Signal ($r_Q$), das von der Basisstation empfangen wird, einer Baugruppe (13) mit Filtern zugeführt wird, welche an Spreizcodes angepasst sind, welche Steuerkanälen zugeordnet sind, die von jeweiligen Funkendgeräten kommen, und

Ausgangsvektoren ($\hat{h}_1$, $\hat{h}$) der angepassten Filter verarbeitet werden, zum Abschätzen von Parametern, welche die Kanäle repräsentieren,

wobei die für einen Kanal, der von einem Funkendgerät kommt, geschätzten Parameter Eigenvektoren ($v_{1,i}$, $v_i$) umfassen, welche Ausbreitungsbahnen zwischen dem Funkendgerät und der Basisstation repräsentieren und jeweils Empfangsamplituden ($a_{1,i}$, $a_i$) in Entsprechung zu den Bahnen zugeordnet sind,

**dadurch gekennzeichnet,**

**dass** die Verarbeitung der Ausgangsvektoren der angepassten Filter umfasst:

eine Abschätzung der Parameter ($v_{1,i}$, $a_{1,i}$) für mindestens einen ersten Kanal auf der Grundlage des Ausgangsvektors ($h_1$) eines ersten Filters, der an den dem ersten Kanal zugeordneten Spreizcode angepasst ist, eine Modifizierung des Ausgangsvektors ($h$) eines zweiten Filters, das an den Spreizcode angepasst ist, welcher mindestens einem zweiten Kanal zugeordnet ist, wobei der Ausgangsvektor des zweiten angepassten Filters im Mittel weniger energiereich ist als der Ausgangsvektor des ersten angepassten Filters, sowie eine Abschätzung der Parameter ($v_i$, $a_i$) für den zweiten Kanal auf der Grundlage des modifizierten Vektors ($h^\perp$) des zweiten angepassten Filters;

und **dass** die Modifizierung des Ausgangsvektors des zweiten angepassten Filters mindestens eine Subtraktion eines Vektors umfasst, der proportional zu einer Projektion des Ausgangsvektors des zweiten angepassten Filters parallel zu einem Vektor der Form $M^H.M_1.v_{1,i}$ ist, wobei $M_1$ und $M$ jeweils Matrizen sind, welche durch die jeweils dem ersten und dem zweiten Kanal zugeordneten Spreizcode bestimmt werden, $v_{1,i}$ einer der für den ersten Kanal abgeschätzten Eigenvektoren ist und $(.)^H$ das konjugierte Transponierte bezeichnet.

2. Verfahren nach Anspruch 1, bei welchem der Eigenvektor $v_{1,i}$ der für den ersten Kanal abgeschätzte Eigenvektor ist, welcher mit der Amplitude verknüpft ist, deren Betrag im Mittel am höchsten ist.

3. Verfahren nach einem der vorhergehenden Ansprüche, bei. welchem die Matrizen $M_1$ und $M$ Töplitz-Matrizen sind, deren Spalten durch Spreizcodes gegeben sind, die jeweils dem ersten und dem zweiten Kanal zugeordnet sind, wobei ein zeitlicher Versatz zwischen dem ersten und dem zweiten Kanal berücksichtigt wird.

4. Verfahren nach einem der vorhergehenden Ansprüche, bei welchem der subtrahierte Vektor durch die Beziehung $\alpha_i/(\alpha_i + NO) J_i J_i^H.h$ gegeben ist, wobei $h$ der Ausgangsvektor des zweiten angepassten Filters ist, $J_i = (1/Q) .M^H. M_1.v_{1,i}$ ist, $Q$ der Spreizfaktor auf den Steuerkanälen ist, $\alpha_1$ eine mittlere Empfangsleistung entlang der Ausbreitungsbahn ist, welche durch den Eigenvektor $v_{1,i}$ dargestellt wird, und $NO$ eine Rauschleistung ist, die auf dem zweiten Kanal abgeschätzt wird.

5. Verfahren nach einem der vorhergehenden Ansprüche, bei dem
jeder der Steuerkanäle gemeinsam mit einem Quadratur-Datenkanal gebildet ist, der von dem gleichen Funkendgerät ausgeht,
ein zweites, von der Basisstation bezogen auf das erste Signal ($r_Q$) mit Phasenquadratur empfangenes Signal ($r_I$) einer zweiten Baugruppe von Filtern (12) zugeführt wird, die an Spreizcodes angepasst sind, die jeweils den von dem Funkendgerät ausgehenden Datenkanälen zugeordnet sind,
zumindest bestimmte der Ausgangsvektoren ($y$) der angepassten Filter der zweiten Baugruppe modifiziert werden,
Informationssymbole abgeschätzt werden, die auf einem von einem Funkendgerät ausgehenden Datenkanal übermittelt werden, indem der modifizierte Ausgangsvektor ($y^\perp$) des zweiten Filters, der an den Spreizcode angepasst ist, welcher dem Datenkanal zugeordnet ist, mit einem Rechen-Empfänger (10) bearbeitet wird, der durch die Parameter ($v_i$, $a_i$) definiert wird, welche für den vom Funkendgerät ausgehenden Steuerkanal abgeschätzt werden, und
die Modifizierung des Ausgangsvektors des angepassten Filters der zweiten Gruppe mindestens eine Subtraktion eines Vektors umfasst, der proportional zu einer Projektion des Ausgangsvektors parallel zu einem Vektor der Form $M'^H.M_1.v_{1,i}$ ist, wobei $M'$ eine Matrix ist, die von dem Spreizkanal bestimmt wird, die dem Datenkanal zugeordnet ist.

6. Vorrichtung zur Signalverarbeitung in einer Basisstation einer Anlage zur Funkkommunikation mit Codemultiplex-Zugriff, welche aufweist:

eine Gruppe von Filtern (13), die an Spreizcodes angepasst sind, die Steuerkanälen zugeordnet sind, die jeweils von Funkendgeräten ausgehen, zum Empfangen eines ersten Signals ($r_I$), das von der Basisstation empfangen wird, sowie
Einrichtungen (11, 17) zum Verarbeiten von Ausgangsvektoren der angepassten Filter zum Abschätzen von Parametern, welche die Kanäle repräsentieren,

wobei die für einen vom Funkendgerät ausgehenden Kanal abgeschätzten Parameter Eigenvektoren ($v_{1,i}$, $v_i$) umfassen, welche Ausbreitungsbahnen zwischen dem Funkendgerät und der Basisstation repräsentieren, die jeweils mit Empfangsamplituden ($a_{1,i}$, $a_{1,i}$) entlang der Bahnen verknüpft sind,

**dadurch gekennzeichnet, dass**

die Einrichtungen zur Verarbeitung umfassen:

Mittel (11) zur Abschätzung von Parametern ($v_{1,i}$, $a_{1,i}$) für mindestens einen ersten Kanal auf der Grundlage des Ausgangsvektors ($h_1$) eines ersten Filters, welcher an den Spreizcode angepasst ist, der dem ersten Kanal zugeordneten ist,

Mittel (17) zur Modifizierung des Ausgangsvektors ($\hat{h}$) eines zweiten Filters, das an den Spreizcode angepasst ist, welcher mindestens einem zweiten Kanal zugeordnet ist, wobei der Ausgangsvektor des zweiten angepassten Filters im Mittel weniger energiereich ist als der Ausgangsvektor des ersten angepassten Filters, und

Mittel (11) zur Abschätzung von Parametern ($v_i$, $a_i$) für den zweiten Kanal auf der Grundlage des modifizierten Vektors ($h^\perp$) des zweiten angepassten Filters

wobei die Modifiziermittel so angeordnet sind, dass sie von dem Ausgangsvektor des zweiten angepassten Filters mindestens einen Vektor abziehen, der proportional zu einer Projektion des Ausgangsvektors des zweiten angepassten Filters parallel zu einem Vektor der Form $M^H.M_1.v_{1,i}$ ist, wobei $M_1$ und M Matrizen sind, welche durch die jeweils dem ersten bzw. zweiten Kanal zugeordneten Spreizcodes bestimmt sind, $v_{1,i}$ einer der Eigenvektoren ist, die für den ersten Kanal abgeschätzt wurden, und $(.)^H$ das konjugierte Transponierte bezeichnet.

**7.** Vorrichtung nach Anspruch 6, bei welcher der Eigenvektor $v_{1,i}$ der Eigenvektor ist, der für den ersten Kanal abgeschätzt wurde, welcher mit der Amplitude verknüpft ist, deren Betrag im Mittel am höchsten ist.

**8.** Vorrichtung nach Anspruch 6 oder 7, bei welcher die Matrizen $M_1$ und M Töplitz-Matrizen sind, deren Spalten durch die jeweils dem ersten bzw. dem zweiten Kanal zugeordneten Spreizcodes gegeben sind, wobei ein zeitlicher Versatz zwischen dem ersten und dem zweiten Kanal berücksichtigt wird.

**9.** Vorrichtung nach einem der Ansprüche 6 bis 8, bei welcher der subtrahierte Vektor durch die Beziehung $\alpha_i/(\alpha_i + NO)J_iJ_i^H.h$ gegeben ist, wobei h der Ausgangsvektor des zweiten angepassten Filters ist, $J_i = (1/Q).M^H.M_1.v_{1,i}$ ist, Q der Spreizfaktor auf den Steuerkanälen ist, $\alpha_1$ eine mittlere Empfangsleistung entlang der Ausbreitungsbahn ist, welche durch den Eigenvektor $v_{1,i}$ dargestellt wird, und NO eine Rauschleistung ist, die auf dem zweiten Kanal abgeschätzt wird.

**10.** Vorrichtung nach einem der Ansprüche 6 bis 9, welche des Weiteren aufweist:

eine zweite Gruppe von Filtern (12), die an Spreizcodes angepasst sind, die jeweils Datenkanälen zugeordnet sind, die gemeinsam mit den Steuerkanälen gebildet sind, welche von Funkendgeräten ausgehen, um ein zweites Signal ($r_I$) zu empfangen, das von der Basisstation bezogen auf das erste Signal ($r_Q$) mit Phasenquadratur empfangen wird,

eine Einrichtung (18) zum Modifizieren von mindestens bestimmten der Ausgangsvektoren ($\hat{y}$) der angepassten Filter der zweiten Gruppe, und

Einrichtungen zum Abschätzen von Informationssymbolen, welche auf mindestens einem Datenkanal übertragen werden, der von einem Funkendgerät ausgeht, wobei ein Rechen-Empfänger (10) einbezogen ist, der von den Parametern ($v_i$,$a_i$) definiert ist, welche für den von dem Funkendgerät ausgehenden Steuerkanal abgeschätzt wurden, und den modifizierten Ausgangsvektor ($y^\perp$) des zweiten Filters empfängt, der an den Spreizcode angepasst ist, welcher dem Datenkanal zugeordnet ist,

wobei die Einrichtung zum Modifizieren des Ausgangsvektors eines angepassten Filters der zweiten Gruppe Mittel zum Subtrahieren eines Vektors enthalten, der proportional zu einer Projektion des Ausgangsvektors parallel zu einem Vektor der Form $M'^H.M_1.v_{1,i}$ ist, wobei M' eine Matrix ist, die durch den Spreizcode bestimmt wird, welcher dem Datenkanal zugeordnet ist.

## Claims

**1.** A signal processing method for a base station of a code-division multiple access radio communication system, wherein a first signal ($r_Q$) received by the base station is fed to a set of filters (13) matched to spreading codes allotted to pilot channels originating from respective radio terminals, and output vectors ($h_1$, $\hat{h}$) from the matched filters are processed to estimate parameters representing said channels, whereby the estimated parameters for a channel originating from a radio terminal comprise eigenvectors ($v_{1,i}$, $v_i$) representing propagation paths between said radio terminal and the base station, respectively associated with amplitudes ($a_{1,i}$, $a_i$) of reception along said paths, **characterized in that** the processing of the output vectors from the matched filters comprises an estimation of parameters ($v_{1,i}$, $a_{1,i}$) for at least one first channel on the basis of the output vector ($h_1$) from a first filter matched to the spreading code allocated to said first channel, a modification of the output vector ($h$) from a second filter matched to the spreading code allocated to at least one second channel, the output vector from the second matched filter having on average less energy than the output vector from the first matched filter, and an estimation of parameters ($v_i$, $a_i$) for said second channel on the basis of the modified output vector ($h^\perp$) of the second matched filter, and **in that** the modification of the output vector from the second matched filter comprises at least one subtraction of a vector proportional to a projection of said output vector from the second matched filter parallel to a vector of the form $M^H.M_1.v_{1,i}$ where $M_1$ and $M$ are matrices determined by the spreading codes respectively allocated to said first and second channels, $v_{1,i}$ is one of the estimated eigenvectors for the first channel, and $(.)^H$ designates the conjugate transpose.

2. Method according to Claim 1, wherein said eigenvector $v_{1,i}$ is the estimated eigenvector for the first channel which is associated with the amplitude having the highest modulus on average.

3. Method according to any one of the preceding claims, wherein the matrices $M_1$ and $M$ are Toeplitz matrices having columns given by the spreading codes respectively allocated to the first and second channels, taking account of a time shift between the first and second channels.

4. Method according to any one of the preceding claims, wherein said subtracted vector is given by $\dfrac{\alpha_i}{\alpha_i + N0} J_i.J_i^H.\hat{h}$, where $h$ is the output vector from the second matched filter, $J_i = \dfrac{1}{Q}.M^H.M_1.v_{1,i}$, Q is the spreading factor on the pilot channels, $\alpha_i$ is an average power of reception along the propagation path represented by the eigenvector $v_{1,i}$ and NO is an estimated noise power on the second channel.

5. Method according to any one of the preceding claims, wherein each of said pilot channels is formed jointly with a quadrature data channel emanating from the same radio terminal, wherein a second signal ($r_I$), received by the base station in phase quadrature with respect to said first signal ($r_Q$), is fed to a second set of filters (12) matched to spreading codes respectively allocated to the data channels originating from the radio terminals, some at least of the output vectors ($\hat{y}$) from the matched filters of the second set are modified, and information symbols transmitted on a data channel originating from a radio terminal are estimated by feeding the modified output vector ($y^\perp$) from the second filter matched to the spreading code allocated to said data channel to a rake receiver (10) defined by the parameters ($v_i$, $a_i$) estimated for the pilot channel originating from said radio terminal, and wherein the modification of the output vector from said matched filter of the second set comprises at least one subtraction of a vector proportional to a projection of said output vector parallel to a vector of the form $M'^H.M_1.v_{1,i}$, where M' is a matrix determined by the spreading code allocated to said data channel.

6. A signal processing device for a base station of a code division multiple access radio communication system, comprising a set of filters (13) matched to spreading codes allocated to pilot channels originating from respective radio terminals, to receive a first signal ($r_I$) received by the base station, and means (11, 17) for processing output vectors from the matched filters so as to estimate parameters representing said channels, whereby the estimated parameters for a channel originating from a radio terminal comprise eigenvectors ($v_{1,i}$, $v_i$) representing propagation paths between said radio terminal and the base station, respectively associated with amplitudes ($a_{1,i}$, $a_i$) of reception along said paths, **characterized in that** said processing means comprise means (11) for estimating parameters ($v_{1,i}$, $a_{1,i}$) for at least one first channel on the basis of the output vector ($h_1$) from a first filter matched to the spreading code allocated to said first channel, means (17) for modifying the output vector ($h$) from a second filter matched to the spreading code allocated to at least one second channel, the output vector from the second matched filter having on average less energy than the output vector from the first matched filter, and means (11 ) for estimating parameters ($v_i$, $a_i$) for said second channel on the basis of the modified output vector ($h^\perp$) of the second matched filter, the modification means being arranged to subtract from the output vector from the second matched filter at least one vector proportional to a projection of said output vector from the second matched filter parallel to a vector of the form $M^H.M_1.v_{1,i}$, where $M_1$ and $M$ are matrices determined by the spreading codes respectively allocated to said first and second channels, $v_{1,i}$ is one of the estimated eigenvectors for the first channel, and $(.)^H$ designates the conjugate transpose.

7. Device according to Claim 6, wherein said eigenvector $v_{1,i}$ is the estimated eigenvector for the first channel which is associated with the amplitude having the highest modulus on average.

8. Device according to Claim 6 or 7, wherein the matrices $M_1$ and $M$ are Toeplitz matrices having columns given by the spreading codes respectively allocated to the first and second channels, taking account of a time shift between the first and second channels.

9. Device according to any one of Claims 6 to 8, wherein said subtracted vector is given by $\frac{\alpha_i}{\alpha_i + N0} J_i J_i^H . \hat{h}$, where $\hat{h}$ is the output vector from the second matched filter, $J_i = \frac{1}{Q} . M^H . M_1 . v_{1,i}$, Q is the spreading factor on the pilot channels, $\alpha_i$ is an average power of reception along the propagation path represented by the eigenvector $v_{1,i}$ and NO is an estimated noise power on the second channel.

10. Device according to any one of Claims 6 to 9, further comprising a second set of filters (12) matched to spreading codes respectively allocated to data channels formed jointly with the pilot channels originating from the radio terminals, so as to receive a second signal ($r_I$) received by the base station in phase quadrature with respect to said first signal ($r_Q$), means (18) for modifying some at least of the output vectors ($\hat{y}$) from the matched filters of the second. set, and means for estimating information symbols transmitted on at least one data channel originating from a radio terminal, including a rake receiver (10) defined by the parameters ($v_i, a_i$) estimated for the pilot channel originating from said radio terminal and receiving the modified output vector ($y^\perp$) from the second filter matched to the spreading code allocated to said data channel, and wherein the means for modifying the output vector from a matched filter of the second set comprise means for subtracting a vector proportional to a projection of said output vector parallel to a vector of the form $M'^H . M_1 . v_{1,i}$, where M' is a matrix determined by the spreading code allocated to said data channel.

_FIG. 1_

_FIG. 2_

_FIG. 3_